(19) Europäisches Patentamt
European Patent Office
Office européen des brevets

(11) **EP 2 469 240 A1**

(12) **EUROPÄISCHE PATENTANMELDUNG**

(43) Veröffentlichungstag:
27.06.2012 Patentblatt 2012/26

(51) Int Cl.:
**G01D 5/14** *(2006.01)*

(21) Anmeldenummer: **11009995.9**

(22) Anmeldetag: **20.12.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **22.12.2010 DE 102010055736**

(71) Anmelder: **Festo AG & Co. KG**
**73734 Esslingen (DE)**

(72) Erfinder: **Kiessling, Albert**
**71263 Weil der Stadt (DE)**

(74) Vertreter: **Kocher, Mark Werner et al**
**Magenbauer & Kollegen**
**Patentanwälte**
**Plochinger Strasse 109**
**73730 Esslingen (DE)**

(54) **Verfahren zur Auswertung von Sensorsignalen sowie hierzu geeignete Sensoranordnung**

(57) Die Erfindung betrifft ein Verfahren zur Auswertung von Sensorsignalen einer Sensoranordnung (1), die aus längs einer Bewegungsachse (3) eines linearbeweglich gelagerten Messobjekts (2) aneinandergereihten Sensoren (9) gebildet ist, die zur Ermittlung von wenigstens zwei zueinander senkrecht ausgerichteten Feldkomponenten (18, 19) ausgebildet sind, die von Felderzeugungsmitteln am Messobjekt (2) (16) bereitgestellt werden. Erfindungsgemäß ist vorgesehen, dass zur Ermittlung der Position des Messobjekts (2) eine erste Signaldifferenz (30a) zwischen Sensorsignalen eines ersten Sensorpaars und eine zweite Signaldifferenz (30b) zwischen Sensorsignalen eines zweiten Sensorpaars ermittelt werden, wobei einer der Sensoren (9) des zweiten Sensorpaars zwischen den beiden Sensoren (9) des ersten Sensorpaars angeordnet ist und wobei einer der Sensoren (9) des ersten Sensorpaars zwischen den Sensoren (9) des zweiten Sensorpaars angeordnet ist, um anschließend durch Interpolation zwischen erster Signaldifferenz (30a) und zweiter Signaldifferenz (30b) die Positionsinformation (31) zu erhalten.

Fig. 1

EP 2 469 240 A1

**Beschreibung**

Die Erfindung betrifft ein Verfahren zur Auswertung von Sensorsignalen einer Sensoranordnung, die aus längs einer Bewegungsachse eines linearbeweglich gelagerten Messobjekts aneinandergereihten Sensoren gebildet ist und die zur Ermittlung von wenigstens zwei zueinander senkrecht ausgerichteten Feldkomponenten eines wenigstens zweidimensionalen Felds ausgebildet sind, das von Felderzeugungsmitteln bereitgestellt wird, die am Messobjekt angebracht sind, wobei die Sensoren jeweils wenigstens ein Sensorsignal bereitstellen, das abhängig von der Position des Messobjekts längs der Bewegungsachse ist. Ferner betrifft die Erfindung eine Sensoranordnung zur Ermittlung einer Position eines linear beweglich gelagerten Messobjekts längs einer Bewegungsachse.

Aus der DE 34 43 176 C1 ist ein Verfahren zur Kalibrierung eines elektronischen Positionsgebers bekannt, bei dem ein bewegbares, der Positionsbestimmung unterworfenes Teil vorgesehen ist, dem ein Sensorträger räumlich benachbart zugeordnet ist, der eine Mehrzahl von elektrisch und räumlich voneinander getrennten Signalgebern aufweist. Über Spannungssignale ist die Position des bewegten Teils feststellbar. Zur Ermittlung einer eindeutigen Charakteristik der Positionsspannungsverteilung werden nur definierten Signalen, insbesondere dem Wert 0 oder anderen charakteristischen Werten, Längenwerte zugeordnet, wobei benachbarte Spannungswerte mit herangezogen werden, um eine eindeutige Bestimmung zu ermöglichen.

Bei dem bekannten Verfahren ergeben sich aufgrund von unterschiedlichen Charakteristika des Messobjekts, beispielsweise der Dimensionierung des Messobjekts, Fehlerquellen, die durch aufwändige Kalibriermaßnahmen ausgeglichen werden müssen.

Somit besteht die Aufgabe der Erfindung darin, ein Verfahren sowie eine Sensoranordnung bereitzustellen, die ohne Anwendung von Kalibriermaßnahmen eine verbesserte Genauigkeit für die Positionsermittlung gewährleisten.

Diese Aufgabe wird gemäß einem ersten Aspekt der Erfindung mit den Merkmalen des Anspruches 1 gelöst. Hierbei ist vorgesehen, dass zur Ermittlung der Position des Messobjekts längs der Sensoranordnung eine erste Signaldifferenz zwischen Sensorsignalen eines ersten Sensorpaars und eine zweite Signaldifferenz zwischen Sensorsignalen eines zweiten Sensorpaars ermittelt werden, wobei einer der Sensoren des zweiten Sensorpaars zwischen den beiden Sensoren des ersten Sensorpaars angeordnet ist und wobei einer der Sensoren des ersten Sensorpaars zwischen den Sensoren des zweiten Sensorpaars angeordnet ist, um anschließend durch Interpolation zwischen der ersten und der zweiten Signaldifferenz eine Positionsinformation zu erhalten. Durch die Differenzbildung im erfindungsgemäßen Verfahren werden Fehler, die in gleicher Weise auf alle Sensoren zutreffen, in vorteilhafter Weise eliminiert. Zusätzlich wird durch die Ermittlung der Signaldifferenzen auf der Basis zueinander verzahnt angeordneter Sensorpaare, bei der die Sensoren des zweiten Sensorpaars einen der Sensoren des ersten Sensorpaars umschließen und die Sensoren des ersten Sensorpaars einen der zweiten Sensoren umschließen, eine weitere Fehlerreduktion erreicht. Nach Ermittlung der ersten Signaldifferenz und der zweiten Signaldifferenz kann durch Interpolation zwischen den beiden ermittelten Signaldifferenzen in einem weiteren Rechenschritt ermittelt werden, um einen Positionswert zu gewinnen, anhand dessen die Position des Messobjekts längs der Bewegungsachse mit einer Genauigkeit bestimmt werden kann, die größer als die Genauigkeit des aus dem Stand der Technik bekannten Verfahrens ist.

Vorteilhafte Weiterbildungen der Erfindung sind Gegenstand der Unteransprüche.

Zweckmäßig ist es, wenn die Sensoren längs der Bewegungsachse in einer festen Teilung angeordnet sind und/oder wenn eine Auswertung der Sensorsignale derart vorgenommen wird, dass ein Sensor des zweiten Sensorpaars mittig zwischen den Sensoren des ersten Sensorpaars angeordnet ist und/oder wenn ein Sensor des ersten Sensorpaars mittig zwischen den Sensoren des zweiten Sensorpaars angeordnet ist. Bei einer Anordnung der Sensoren in einer konstanten Teilung entfällt eine Ermittlung und Korrektur von unterschiedlichen Abständen zwischen den Sensoren. Durch die mittige Anordnung der Sensoren zwischen den Sensoren des korrespondierenden Sensorpaars werden beispielsweise Inhomogenitäten im bereitgestellten Feld, die insbesondere auf die Aufbauweise der Felderzeugungsmittel zurückgehen, zumindest teilweise kompensiert, ohne dass hierzu ein zusätzlicher Aufwand im Hinblick auf die Anordnung der Sensoren und/oder die Verarbeitung der Messsignale vorgenommen werden muss.

Bei einer Weiterbildung der Erfindung ist vorgesehen, dass eine zur Ermittlung der jeweiligen Signaldifferenz zugrundegelegte Basisbreite zwischen den beiden Sensoren des ersten und/oder des zweiten Sensorpaars wenigstens einer zweifachen Teilung, insbesondere einem ganzzahligen Vielfachen - mit einem Betrag größer eins - der Teilung, mit der die Sensoren längs der Bewegungsachse aneinandergereiht sind, entspricht. Die geringste Basisbreite ergibt sich dadurch, dass die Auswertung von Sensorsignalen derart erfolgt, dass jeweils um die zweifache Teilung voneinander beabstandete Sensoren Sensorpaare bilden, deren Sensorsignale in einem ersten Auswertungsschritt in Beziehung gesetzt werden und die erste und zweite Signaldifferenz bilden. In einem zweiten Berechnungsschritt werden die Signaldifferenzen derjenigen Sensorpaare miteinander in Beziehung gesetzt, deren jeweils einer Sensor um die halbe Basisbreite entfernt zu den Sensoren des anderen Sensorpaares angeordnet ist und die somit gewissermaßen miteinander verzahnt sind. Bei abweichenden Geometrien des Messobjekts kann vorgesehen werden, dass die Basisbreite ein ganzteiliges Vielfaches der Teilung entspricht, das größer 2 gewählt wird, um beispielsweise auch bei Messobjekten mit großer Ausdehnung eine Ermittlung der Position des Messobjekts mit einem geringen Fehler vornehmen zu können.

Bei einer vorteilhaften Weiterbildung der Erfindung ist vorgesehen, dass die Positionsbestimmung des Messobjekts anhand einer linearen Interpolation, insbesondere nach der Formel $X_G = 0,5*d*((G_{x-n} + G_{x+n} / (G_{x-n} - G_{x+n}))$ [Gleichung 1], durchgeführt wird. Dabei entspricht d der Basisbreite der zur Positionsbestimmung herangezogenen Sensoren, also dem ganzzahligen Vielfachen der Teilung der Sensoren. Der Wert x repräsentiert als Index abstrakt die gesuchte Position des Messobjekts. Der Wert n bezeichnet als Index abstrakt die jeweils links und rechts des gesuchten Ortes gelegenen Signaldifferenzwerte, die sich durch die Subtraktion der Sensorsignale der jeweiligen Sensorpaare ergeben. Bei der praktischen Durchführung des Verfahrens werden in einem ersten Schritt zunächst die zwei ineinander verzahnten Sensorpaare aus der Vielzahl von Sensorpaaren identifiziert, deren Sensoren die betragsmäßig größten Signalpegel aufweisen. In einem nachfolgenden Schritt werden dann die Signaldifferenzen der jeweiligen Sensorpaare ermittelt. Diese Signaldifferenzwerte werden in einem abschließenden Schritt der Gleichung 1 zugeführt, um durch die lineare Interpolation eine möglichst exakte Positionsbestimmung für das Messobjekt zu erreichen.

Vorzugsweise wird die Positionsbestimmung des Messobjekts anhand des Ergebnisses der Auswertung der Sensorsignale unter Verwendung eines Berechnungsalgorithmus oder einer Wertetabelle durchgeführt. Somit kann rasch aus dem Ergebnis der Interpolation ein Messwert in einer zweckmäßig verarbeitbaren Dimension und/oder Formatierung bereitgestellt werden.

Bevorzugt wird die Basisbreite bei vorgegebener Teilung der Sensoren in Abhängigkeit von Eigenschaften des Messobjekts, insbesondere in Abhängigkeit von einer Breite oder einem Durchmesser des Messobjekts, derart angepasst, dass das Messergebnis einen minimalen Fehler aufweist. Bei einer Sensoranordnung mit vorgegebener Teilung stellen sich bei der Verwendung dieser Sensoranordnung zur Positionsermittlung bei unterschiedlich gestalteten Messobjekten, beispielsweise pneumatischen Kolben mit kleinem oder großem Durchmesser, unterschiedliche Messgenauigkeiten ein. Um die Messgenauigkeit für den jeweiligen Anwendungsfall zu erhöhen, kann vorgesehen werden, die Basisbreite entsprechend der Geometrie des Messobjekts anzupassen. Beispielsweise beträgt die Basisbreite für ein Messobjekt mit kleinem Durchmesser das Zweifache der Teilung, während bei einem Messobjekt mit einem erheblich größerem Durchmesser und der Verwendung der identischen Sensoranordnung die Basisbreite beispielsweise ein Vierfaches oder Sechsfaches der Teilung betragen kann. Vorzugsweise wird die Basisbreite stets so gewählt, dass sich ein minimaler Messfehler ergibt, dies kann beispielsweise in empirischen Versuchen im Vorfeld ermittelt werden. Somit kann dem Anwender der Sensoranordnung eine Handlungsanweisung an die Hand gegeben werden, welche Basisbreite für ein vorteilhaftes Messergebnis zu wählen ist, wenn er ein Messobjekt mit einer vorgegebenen Geometrie abtasten möchte.

Bevorzugt wird bei der Verwendung von Sensoren, die jeweils zwei zur Ermittlung einzelner Feldkomponenten des Felds ausgebildete Sensormittel aufweisen, das Sensorsignal jedes Sensors als Quadratwurzel der Summe der Quadrate der von den Sensormitteln gemessenen radialen und axialen Feldkomponenten des wenigstens zweidimensionalen Felds ermittelt. Durch diese zusätzliche Rechenoperation können für das erfindungsgemäße Verfahren auch Sensoren eingesetzt werden, die wenigstens zwei diskrete, jeweils eine der Feldkomponenten des Felds messende Sensormittel aufweisen. Beispielsweise wird hierdurch die Verwendung von zweidimensionalen Hall-Sensoren ermöglicht, bei denen ein erster Hall-Sensor die radiale Feldkomponente und ein zweiter Hall-Sensor die axiale Feldkomponente an einem gegebenen Ort längs der Bewegungsachse des Messobjekts ermittelt.

Gemäß einem zweiten Aspekt der Erfindung wird die oben genannte Aufgabe für eine Sensoranordnung der eingangs genannten Art mit den Merkmalen des Anspruches 8 gelöst. Hierbei ist vorgesehen, dass eine Auswerteeinrichtung zur Auswertung der Sensorsignale vorgesehen ist, die derart eingerichtet ist, dass sie anhand einer ersten Signaldifferenz zwischen Sensorsignalen eines ersten Sensorpaars und einer zweiten Signaldifferenz zwischen Sensorsignalen eines zweiten Sensorpaars eine Positionsermittlung für das Messobjekt anhand einer Subtraktion der Signaldifferenzen vornimmt, wobei ein Sensor des zweiten Sensorpaars zwischen den beiden Sensoren des ersten Sensorpaars angeordnet ist und wobei ein Sensor des ersten Sensorpaars zwischen den Sensoren des zweiten Sensorpaars angeordnet ist. Durch die verzahnte Anordnung der auszuwertenden Sensoren und die Bildung der Signaldifferenzen kann die Position des Messobjekts längs der Bewegungsachse mit einfachen Mitteln und einer hohen Genauigkeit erzielt werden. Bei der Auswerteeinrichtung kann es sich beispielsweise um einen Mikrocontroller oder Mikroprozessor handeln, der räumlich beabstandet zu den Sensoren angeordnet ist oder in einem der Sensoren angeordnet ist. Alternativ kann vorgesehen sein, dass jeder der Sensoren vorgebbare Verarbeitungsschritte zur Auswertung der Position des Messobjekts vornimmt, so dass die Sensoren in ihrer Gesamtheit neben der Ermittlung der Feldstärken auch die Auswertung der Sensorsignale vornehmen. Vorzugsweise sind die Sensoren mittels eines Bussystems untereinander verbunden.

Bei einer vorteilhaften Weiterbildung der Erfindung ist vorgesehen, dass die Sensoren in einer konstanten Teilung längs der Bewegungsachse angeordnet sind und/oder dass die Felderzeugungsmittel als Magnetmittel, insbesondere als Permanentmagnete, ausgebildet sind. Durch die konstante Teilung der Sensoren ist eine Auswertung der von den Sensoren bereitgestellten Sensorsignale in vorteilhafter Weise möglich, da der örtliche Bezug der Sensoren untereinander bereits durch die Teilung festgelegt ist. Bevorzugt sind die Sensoren mechanisch derart ausgebildet, dass die Teilung ohne weiteres Zutun eines Benutzers eingehalten wird, beispielsweise durch entsprechende Gestaltung der Gehäuse der Sensoren. Zweckmäßig ist es, wenn die Felderzeugungsmittel als Magnetmittel ausgebildet sind, für die Auswertung von Magnetfeldern stehen eine Reihe von Sensoren zur Verfügung, die mittlerweile bei hoher Präzision kostengünstig beschafft werden können. Beispielsweise sind die Sensoren als zweidimensionale Hall-Sensoren, als GMR-Sensoren (Riesenmagnetowiderstands-Sensoren / giant magneto resistance sensors), als Förster-Sonden oder als Magnetoimpedanzsensoren ausgebildet. Hierbei kann auch eine Mischbauweise vorgesehen werden, bei der die vorgenannten Sensortypen oder auch andere Sensortypen, die zur Ermittlung von wenigstens zwei Feldkomponenten eines Felds ausgebildet sind, miteinander gemischt werden. Hall-Sensoren sind von Natur aus eindimensional und bipolar messende Sensoren, die jeweils nur eine Feldkomponente des magnetischen Felds erfassen, hierfür jedoch auch die Richtung der jeweiligen Feldkomponente des Felds ermitteln können. Demgegenüber ist die überwiegende Anzahl der vorgenannten Sensoren als zweidimensionale und uniopolare Sensoren ausgebildet, bei denen das Sensormittel ohne einen rechnerischen Zwischenschritt unmittelbar den Gesamtbetrag des aus den beiden Feldkomponenten gebildeten Feldvektors ermittelt.

Bei einer vorteilhaften Weiterbildung der Erfindung ist vorgesehen, dass die Sensoren um einen Winkel, insbesondere um 45 Grad, gegenüber den von den Felderzeugungsmitteln vorbestimmten axialen und radialen Raumrichtungen, ausgerichtete Sensormittel umfassen. Hierdurch können eindimensional messende Sensormittel, die grundsätzlich nur eine Feldkomponente ermitteln, zur Ermittlung des Vektorbetrags der beiden Feldkomponenten des von den Felderzeugungsmitteln abgegebenen Felds eingesetzt werden. Dies ist beispielsweise von Vorteil, wenn Hall-Sensoren oder Magnetoimpedanzsensoren eingesetzt werden sollen.

Eine vorteilhafte Ausführungsform der Erfindung ist in der Zeichnung dargestellt. Dabei zeigt:

Figur 1     eine schematische Darstellung einer Sensoranordnung, die aus mehreren längs einer Bewegungsachse aneinander gereihten Sensoren aufgebaut ist,

Figur 2     eine detaillierte Darstellung eines Sensors aus der Sensoranordnung, der ein um 45 Grad gegenüber den Feldkoordinaten der Felderzeugungsmittel verdrehtes Sensormittel umfasst,

Figur 3     ein Schaubild mit den axialen und radialen Feldkomponenten des von den Felderzeugungsmitteln bereitgestellten Felds, gemessen von unipolaren und bipolaren Sensoren,

Figur 4     ein Schaubild mit den axialen und radialen Feldkomponenten, gemessen von einem unipolaren Sensor sowie dem daraus resultierenden, zweidimensionalen Vektorbetrag,

Figur 5     ein Schaubild mit den zweidimensionalen Vektorbeträgen eines ersten und eines zweiten Sensors sowie einer Signaldifferenzkurve aus den beiden zweidimensionalen Vektorbeträgen,

Figur 6     ein Schaubild mit mehreren Signaldifferenzkurven, die sich bei Zugrundelegung unterschiedlicher Basisbreiten ergeben,

Figur 7     ein Schaubild mit insgesamt vier zweidimensionalen Vektorbeträgen benachbarter Sensoren, daraus abgeleiteten Signaldifferenzkurven und einer aus den Signaldifferenzkurven abgeleiteten linearen Interpolation der Signaldifferenzkurven.

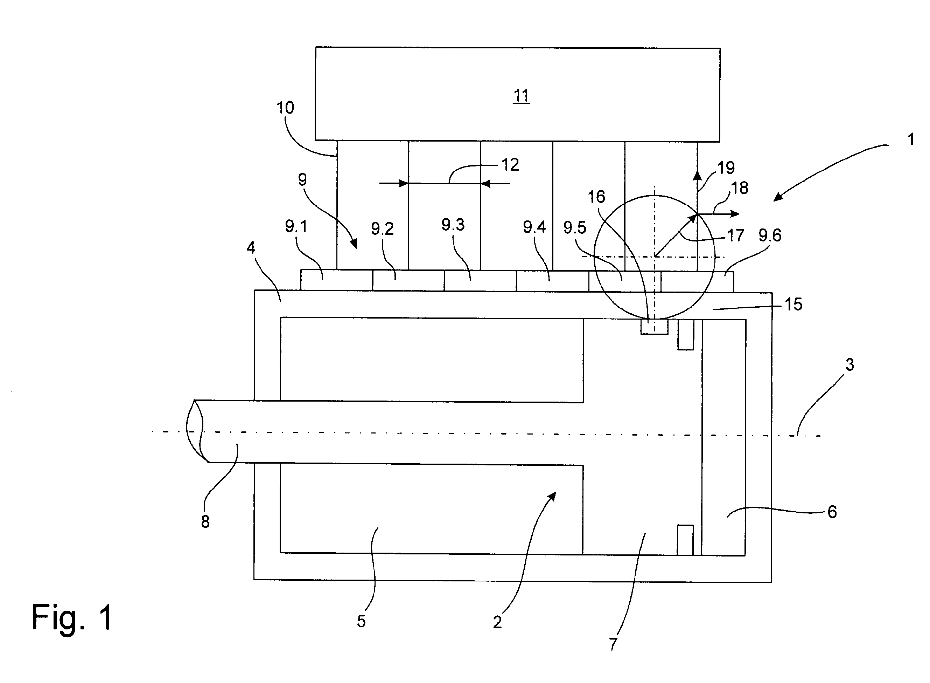

Aus der Figur 1 geht eine Sensoranordnung 1 zur Ermittlung einer Position eines Messobjekts 2 hervor, das längs einer Bewegungsachse 3 linearbeweglich gelagert ist. Bei dem Messobjekt 2 handelt es sich exemplarisch um einen pneumatischen Zylinder, der lediglich schematisch dargestellt ist und ein Zylindergehäuse 4 sowie einen darin linearbeweglich aufgenommenen und mit dem Zylindergehäuse 4 zwei pneumatisch voneinander getrennte Arbeitsräume 5, 6 ausbildenden Arbeitskolben 7 umfasst. An dem Arbeitskolben 7 ist eine Kolbenstange 8 abgebracht, die eine Stirnseite des Zylindergehäuses 4 abdichtend durchsetzt und eine Übertragung der linearen Bewegung des Arbeitskolbens 7 längs der Bewegungsachse 3 auf ein nicht dargestelltes Bewegungsglied ermöglicht.

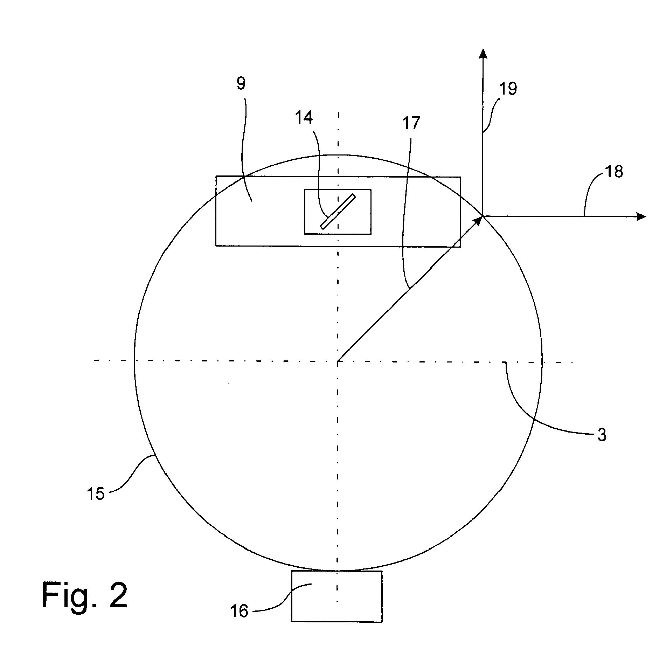

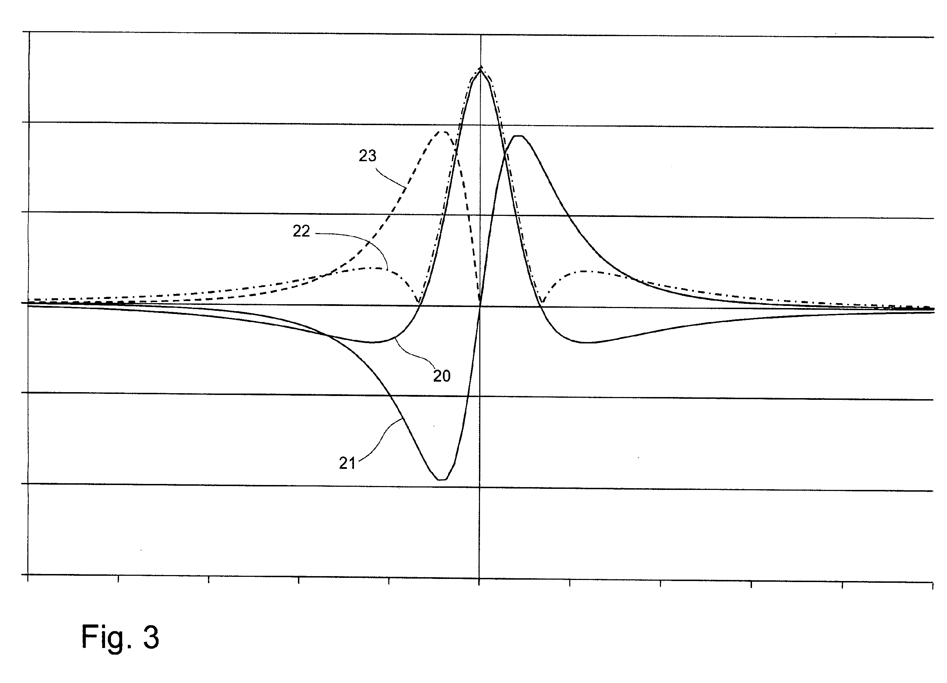

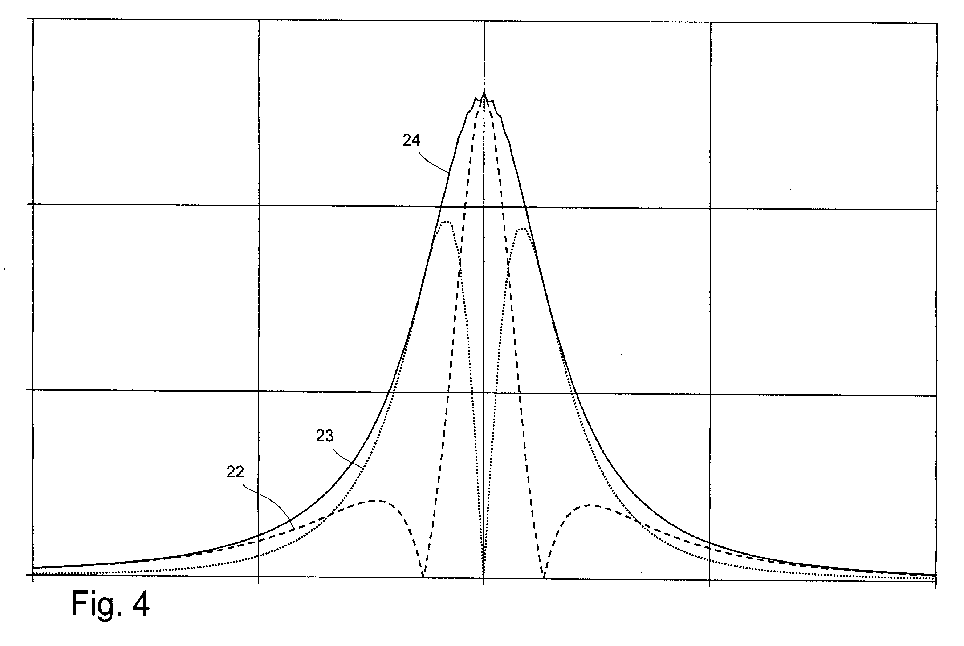

Um eine möglichst exakte Bestimmung der Position des Arbeitskolbens 7 längs der Bewegungsachse 3 zu ermöglichen, umfasst die Sensoranordnung mehrere in Reihe längs der Bewegungsachse 3 aneinandergereihte Sensoren 9, die für die nachstehenden Betrachtungen sofern notwendig mit einer fortlaufenden Indexziffer als Sensoren 9.1, 9.2, 9.3, 9.4, 9.5 und 9.6 bezeichnet sind und die jeweils dazu ausgebildet sind, unabhängig voneinander ein Sensorsignal über eine Sensorleitung 10 an eine Auswerteeinrichtung 11 bereitzustellen. Exemplarisch sind die Sensoren 9 längs der Bewegungsachse 3 unmittelbar aneinandergrenzend angeordnet, sie können jedoch auch mit einer Beabstandung zueinander angeordnet sein. Bevorzugt sind die Sensoren 9 jeweils in gleichen Abständen zueinander angeordnet, wobei diese Abstände auch als Teilung t bezeichnet werden, die exemplarisch mit dem Bezugszeichen 12 markiert ist. Bei den Sensoren 9 kann es sich exemplarisch um magnetfeldempfindliche Sensoren, beispielsweise Hall-Sensoren, handeln, die auf ein Feld 15 empfindlich sind, das von Felderzeugungsmitteln 16 hervorgerufen wird. Die Sensoren 9 stellen jeweils ein elektrisches Sensorsignal zur Verfügung, wie es exemplarisch in den Figuren 3 und 4 dargestellt ist, und das in Abhängigkeit zu der Feldstärke des von den Felderzeugungsmitteln 16 bereitgestellten Feldes und des Abstands zwischen dem jeweiligen Sensor 9 und dem Felderzeugungsmittel 16 steht. Bei den Felderzeugungsmitteln 16 kann es sich beispielsweise um einen oder mehrere Permanentmagnete handeln, die am Arbeitskolben 7 angebracht sind. Das von den Felderzeugungsmitteln 16 bereitgestellte Feld 15 entspricht exemplarisch einem idealen Kreisfeld und ist in den Figuren 1 und 2 schematisch kreisförmig dargestellt, bei dem sich in der Darstellungsebene der Figur 1 ein Feldvektor aus einer parallel zur Bewegungsachse 3 verlaufenden Feldkomponente 18 und einer quer zur Bewegungsachse 3 ausgerichteten Feldkomponente 19 zusammensetzt.

Bei der erfindungsgemäßen Ausführungsform der Sensoranordnung 1 sind die Sensoren 9 derart ausgebildet, dass sie sowohl die axiale Feldkomponente 18 als auch die radiale Feldkomponente 19 ermitteln können. Je nach Ausgestaltung des Sensors liefert ein im Sensor 9 angeordnetes, in der Figur 1 nicht näher dargestelltes Sensormittel einen Absolutwert für eine der Feldkomponenten oder einen Betrag für eine der Feldkomponenten oder den auf beide Feldkomponenten bezogenen Absolutwert oder Betrag des Feldvektors.

Bei einer vorteilhaften Ausführungsform der Erfindung, die in der Figur 2 dargestellt ist, ist ein Sensormittel 14 in einem Sensor 9 vorgesehen, das an sich als eindimensionales Sensormittel ausgebildet ist und dementsprechend nur die Anteile der auf seine eigene Achse projizierten Feldkomponenten 18, 19 ermitteln kann. Durch eine Verdrehung, vorzugsweise um 45 Grad, um eine Achse normal zu den Feldkomponenten 18, 19 und normal zur Darstellungsebene der Figur 2 wird erreicht, dass sowohl die axiale als auch die radiale Feldkomponente 18, 19, jeweils verringert um den Faktor 1/Wurzel 2, von dem Sensormittel 14 in der Art eines Feldvektors erfasst werden können.

In der Figur 3 sind die Signalverläufe von Sensormitteln in Abhängigkeit von einer Beabstandung der Felderzeugungsmittel 16 vom jeweiligen Sensormittel aufgetragen. Bei den Sensormitteln, deren Signale 20, 21, 2, 23 in der Figur 3 dargestellt sind, handelt es sich exemplarisch um eindimensionale Sensormittel, die entweder jeweils nur die radiale Feldkomponente 18 oder axiale Feldkomponente 19 erfassen können. Die Signalverläufe 20, 21 sind die Signalverläufe sogenannter bipolarer Sensormittel, die den Wert der jeweiligen Feldkomponente 18, 19 ermitteln können. Die Signalverläufe 22, 23 sind die Signalverläufe sogenannter unipolarer Sensormittel, die den Betrag der jeweiligen Feldkomponente 18, 19 ermitteln. Wie aus der Darstellung der Figur 3 entnommen werden kann, sind sämtliche Signalverläufe 20-23 nur in sehr kleinen Intervallen linear und teilweise außerhalb des linearen Bereichs auch uneindeutig, so dass allein aufgrund dieser Signalverläufe eine zuverlässige und präzise Bestimmung der Position des Messobjekts 2 längs der Bewegungsachse 3 nicht möglich ist.

Aus der Figur 4 geht ein Schaubild hervor, das nochmals den Signalverlauf eines eindimensionalen unipolaren Sensormittels für die beiden Feldkomponenten 18, 19 wiedergibt, wobei aus diesen beiden Werten durch Quadrierung der jeweiligen lokalen Beträge der beiden Feldkomponenten 18, 19, Bildung der Summe der gebildeten Quadrate und Ermitteln der Quadratwurzel der gebildeten Summe eine Kurve für den Vektorbetrag 24 der zugrundeliegenden Signalverläufe 22 und 23 gebildet werden kann. Der Vektorbetrag 24 bildet die Grundlage für die nachfolgend näher beschriebene Auswertung der Signale mehrerer Sensoren 9 zur verbesserten Positionsbestimmung.

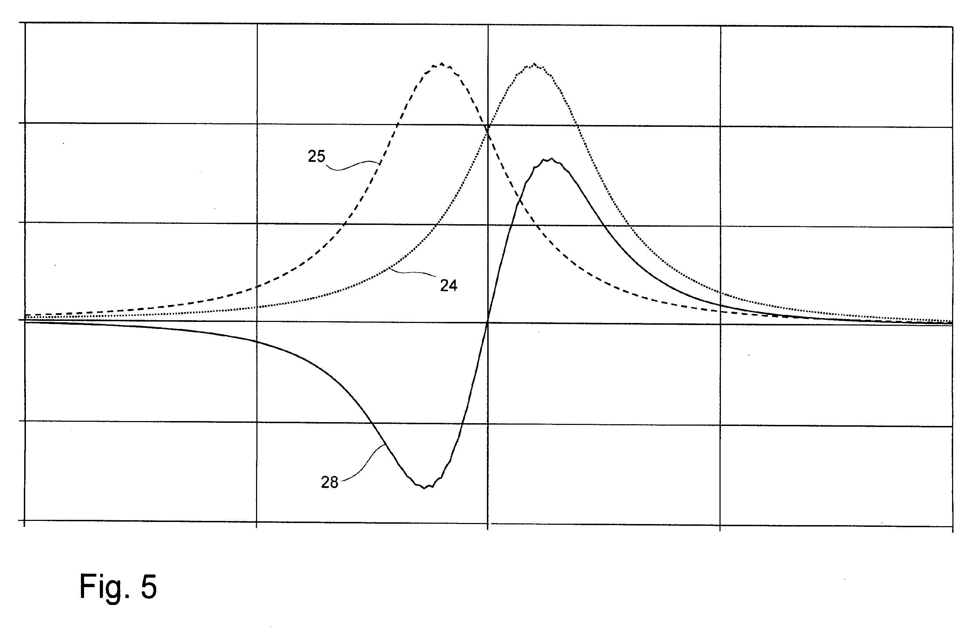

Aus der Figur 5 geht hervor, dass durch Differenzbildung zwischen dem Vektorbetrag 24 eines ersten Sensors, exemplarisch des Sensors 9.5, und dem Vektorbetrag 25 eines zweiten Sensors, exemplarisch des Sensors 9.6, die längs der Bewegungsachse 3 um die Teilung 12 unmittelbar beabstandet zueinander angeordnet sind, eine Signaldifferenzkurve 28 ermittelt werden kann, die einen erheblich größeren linearen Bereich als die zugrundeliegenden Signalverläufe 20-23 aufweist und somit als Grundlage für die Positionsermittlung des Messobjekts 2 längs der Bewegungsachse 3 dienen kann. Werden nunmehr Signaldifferenzkurven mehrerer Sensorpaare miteinander in Beziehung gesetzt, so ergeben sich je nach Beabstandung oder Basisbreite der jeweiligen Sensorpaare unterschiedliche Resultate.

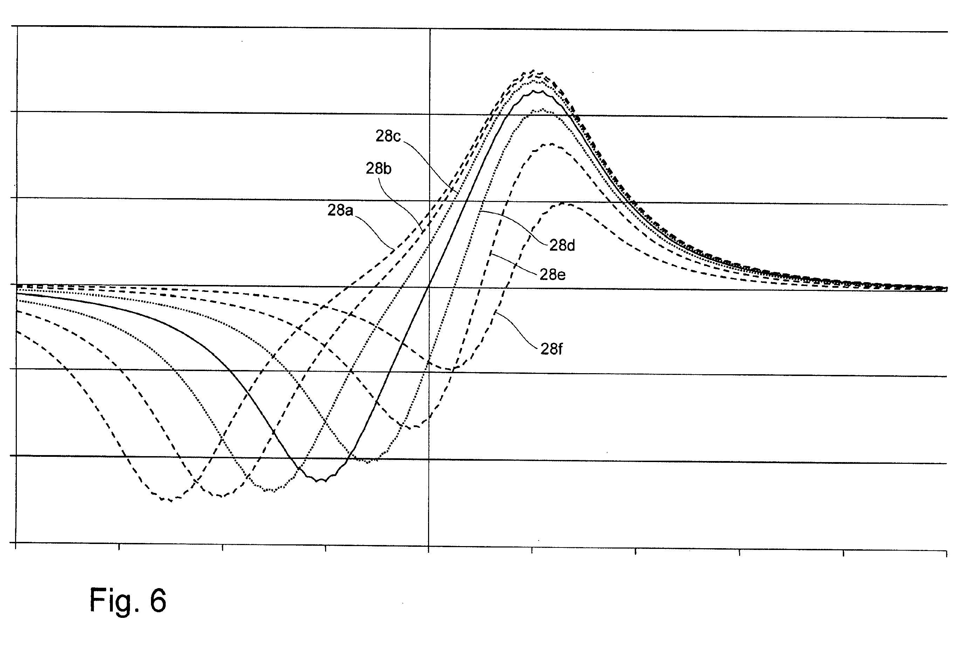

Aus der Figur 6 geht eine Kurvenschar für unterschiedliche Abstände von Sensoren 9 hervor, die den jeweiligen Signaldifferenzkurven 28a-28g zugrundegelegt werden. Aus der Figur 6 lässt sich entnehmen, dass für ein gegebenes Messobjekt 2 und eine gegebene Teilung 12 zwischen den Sensoren 9 ein Optimum hinsichtlich der Auswertung der Vektorbeträge gefunden werden kann, die auf Basis der Signalverläufe der einzelnen Sensoren 9 ermittelt werden. Exemplarisch ist aus der Figur 6 zu entnehmen, dass eine Auswertung von Sensoren, die um das Vierfache der Teilung voneinander beabstandet sind, bei dem gegebenen Messobjekt 2 zu einem besonders vorteilhaften Ergebnis führen können. Bei einem anderen Messobjekt könnte bei gleicher Teilung der Sensoren 9 eine andere Basisbreite, die ebenfalls ein ganzteiliges Vielfaches der Teilung t beträgt, günstiger sein.

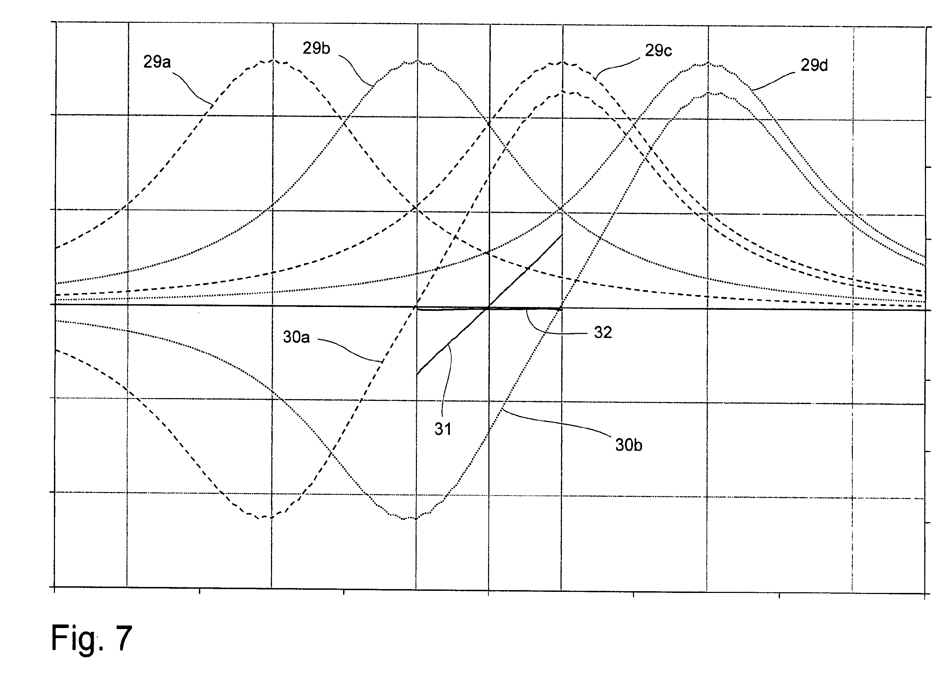

Aus der Figur 7 gehen insgesamt vier Vektorbeträge 29 hervor, die jeweils die Vektorbeträge 29a, 29b, 29c, 29d unmittelbar benachbarter Sensoren 9 repräsentieren. Die aus den Vektorbeträgen 29 durch Differenzbildung ermittelten Signaldifferenzkurven 30a, 30b werden jeweils aus denjenigen Vektorbeträgen von Sensoren 9 gebildet, die um das zweifache der Teilung 12 voneinander beabstandet sind. Beispielhaft könnte die erste Signaldifferenzkurve 30a aus den Vektorbeträgen der Sensoren 9.2 und 9.4 berechnet sein, während sich die zweite Signaldifferenzkurve 30b exemplarisch aus den Vektorbeträgen der Sensoren 9.3 und 9.5 ergibt. Somit beträgt die Basisbreite exemplarisch das zweifache der Teilung 12 und die beiden Sensoren 9.2 und 9.4, die ein erstes Sensorpaar bilden, umgreifen den Sensor 9.3, der Bestandteil eines zweiten, exemplarisch aus den Sensoren 9,3 und 9.5 gebildeten Sensorpaars ist. Das zweite Sensorpaar aus den Sensoren 9.3 und 9.5 umgreift seinerseits den Sensor 9.4 des ersten Sensorpaars, so dass die Sensoren 9, die die Sensorsignale für die Positionsermittlung liefern, auswertungsseitig miteinander verzahnt sind. Da hier die Basisbreite das zweifache der Teilung 12 beträgt, sind die Sensoren 9.3 und 9.4 jeweils mittig zwischen den umgebenden Sensorpaaren 9.2 und 9.4 bzw. 9.3 und 9.5 angeordnet.

Exemplarisch ergibt sich somit die Signaldifferenzkurve 30a aus den Vektorbeträgen 29a und 29c, während sich die Signaldifferenzkurve 30b aus den Vektorbeträgen 29b und 29d ergibt. Wie aus der Figur 7 weiterhin entnommen werden kann, weisen die beiden Signaldifferenzkurven 30a, 30b jeweils einen großen linearen Bereich auf, der nunmehr durch eine abschließende lineare Interpolation gemäß der Formel

$$X_G = 0,5*d*((G_{x-n}+G_{x+n})/(G_{x-n}-G_{x+n}))\quad(1)$$

ermittelt werden kann.

Sofern die beiden linearen Bereiche der Signaldifferenzkurven 30a, 30b für die Durchführung der linearen Interpolation 31 zugrundgelegt werden können, ergibt sich eine ebenfalls in der Figur 4 als nahezu parallel zur x-Achse verlaufende Fehlerkurve 32. Das Ergebnis der Gleichung (1) kann einem nicht dargestellten Algorithmus oder einer nicht dargestellten Wertetabelle zugeführt werden, um rasch den tatsächlichen Positionswert für die Position des Messobjekts 2 längs der Bewegungsachse 3 ermitteln zu können.

**Patentansprüche**

1. Verfahren zur Auswertung von Sensorsignalen einer Sensoranordnung (1), die aus längs einer Bewegungsachse (3) eines linearbeweglich gelagerten Messobjekts (2) aneinandergereihten Sensoren (9) gebildet ist, die zur Ermittlung von wenigstens zwei zueinander senkrecht ausgerichteten Feldkomponenten (18, 19) eines wenigstens zweidimensionalen Felds (15) ausgebildet sind, das von Felderzeugungsmitteln (16) bereitgestellt wird, die am Messobjekt (2) angebracht sind, wobei die Sensoren (9) jeweils wenigstens ein Sensorsignal (20, 21, 22, 23) bereitstellen, das abhängig von der Position des Messobjekts (2) längs der Bewegungsachse (3) ist, **dadurch gekennzeichnet, dass** zur Ermittlung der Position des Messobjekts (2) längs der Sensoranordnung (1) eine erste Signaldifferenz (30a) zwischen Sensorsignalen eines ersten Sensorpaars und eine zweite Signaldifferenz (30b) zwischen Sensorsignalen eines zweiten Sensorpaars ermittelt werden, wobei einer der Sensoren (9) des zweiten Sensorpaars zwischen den beiden Sensoren (9) des ersten Sensorpaars angeordnet ist und wobei einer der Sensoren (9) des ersten Sensorpaars zwischen den Sensoren (9) des zweiten Sensorpaars angeordnet ist, um anschließend durch Interpolation zwischen erster Signaldifferenz (30a) und zweiter Signaldifferenz (30b) die Positionsinformation (31) zu erhalten.

2. Verfahren nach Anspruch 1, **dadurch gekennzeichnet, dass** die Sensoren (9) längs der Bewegungsachse (3) in einer festen Teilung (12) angeordnet sind und/oder dass eine Auswertung der Sensorsignale (20-23) derart vorgenommen wird, dass ein Sensor (9) des zweiten Sensorpaars mittig zwischen den Sensoren (9) des ersten Sensorpaars angeordnet ist und/oder dass ein Sensor (9) des ersten Sensorpaars mittig zwischen den Sensoren (9) des zweiten Sensorpaars angeordnet ist.

3. Verfahren nach Anspruch 1 oder 2, **dadurch gekennzeichnet, dass** eine zur Ermittlung der jeweiligen Signaldifferenz zugrundegelegte Basisbreite zwischen den beiden Sensoren (9) des ersten und/oder des zweiten Sensorpaars wenigstens einer zweifachen Teilung (12), insbesondere einem ganzzahligen Vielfachen der Teilung (12), mit der die Sensoren (9) längs der Bewegungsachse (3) aneinandergereiht sind, entspricht

4. Verfahren nach einem der vorhergehenden Ansprüche, **dadurch gekennzeichnet, dass** die Positionsbestimmung des Messobjekts (2) anhand einer linearen Interpolation, insbesondere nach der Formel $X_G = 0,5*d*((G_{x-n}+G_{x+n}/(G_{x-n}-G_{x+n}))$, durchgeführt wird.

5. Verfahren nach einem der vorhergehenden Ansprüche, **dadurch gekennzeichnet, dass** die Positionsbestimmung des Messobjekts (2) anhand des Ergebnisses der Auswertung der Sensorsignale unter Verwendung eines Berechnungsalgorithmus oder einer Wertetabelle durchgeführt wird.

6. Verfahren nach einem der vorhergehenden Ansprüche, **dadurch gekennzeichnet, dass** die Basisbreite bei vorgegebener Teilung (12) der Sensoren (9) in Abhängigkeit von Eigenschaften des Messobjekts (2), insbesondere in Abhängigkeit von einer Breite oder einem Durchmesser des Messobjekts (2) quer zur Bewegungsachse (3), derart angepasst wird, dass das Messergebnis einen minimalen Fehler aufweist.

7. Verfahren nach einem der vorhergehenden Ansprüche, **dadurch gekennzeichnet, dass** bei der Verwendung von Sensoren (9), die jeweils zwei zur Ermittlung einzelner Feldkomponenten (18, 19) des Felds (15) ausgebildete Sensormittel aufweisen, das Sensorsignal jedes Sensors (9) als Quadratwurzel der Summe der Quadrate der von den Sensormitteln gemessenen radialen und axialen Feldkomponenten (18, 19) des wenigstens zweidimensionalen Felds (15) ermittelt wird.

8. Sensoranordnung zur Ermittlung einer Position eines linearbeweglich gelagerten Messobjekts (2) längs einer Bewegungsachse (3), mit mehreren längs der Bewegungsachse (3) aneinandergereihten Sensoren (9), die zur Ermittlung von wenigstens zwei zueinander senkrecht ausgerichteten Feldkomponenten (18, 19) eines wenigstens zweidimensionalen Felds (15) ausgebildet sind, das von Felderzeugungsmitteln (16) bereitgestellt wird, die am Messobjekt (2) angebracht sind, wobei die Sensoren (9) jeweils ein Sensorsignal (20, 21 ,22 , 23) bereitstellen, das abhängig von der Position des Messobjekts (2) längs der Bewegungsachse (3) ist, **dadurch gekennzeichnet, dass** eine Auswerteeinrichtung (11) zur Auswertung der Sensorsignale (20, 21, 22, 23) vorgesehen ist, die derart eingerichtet ist, dass sie anhand einer ersten Signaldifferenz (28a bis 28g) zwischen Sensorsignalen (20, 21, 22, 23) eines ersten Sensorpaars und einer zweiten Signaldifferenz (28a bis 28g) zwischen Sensorsignalen (20, 21, 22, 23) eines zweiten Sensorpaars eine Positionsermittlung für das Messobjekt (2) anhand einer Subtraktion der Signaldifferenzen (28a-g) vornimmt, wobei ein Sensor (9) des zweiten Sensorpaars zwischen den beiden Sensoren (9) des ersten Sensorpaars angeordnet ist und wobei ein Sensor (9) des ersten Sensorpaars zwischen den Sensoren (9) des zweiten Sensorpaars angeordnet ist.

9. Sensoranordnung nach Anspruch 8, **dadurch gekennzeichnet, dass** die Sensoren (9) in einer konstanten Teilung längs der Bewegungsachse (3) angeordnet sind und/oder dass die Felderzeugungsmittel (16) als Magnetmittel, insbesondere als Permanentmagnete, ausgebildet sind.

10. Sensoranordnung nach Anspruch 7, 8 oder 9, **dadurch gekennzeichnet, dass** die Sensoren (9) um einen Winkel, insbesondere um 45 Grad, gegenüber der axialen oder radialen Feldkomponente (18, 19), insbesondere Magnetfeldkomponente, ausgerichtete Sensormittel (14) aufweisen.

Fig. 1

EP 2 469 240 A1

Fig. 2

Fig. 3

Fig. 4

Fig. 5

Fig. 6

Fig. 7

Europäisches
Patentamt

European
Patent Office

Office européen
des brevets

# EUROPÄISCHER RECHERCHENBERICHT

Nummer der Anmeldung

EP 11 00 9995

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 100 42 006 A1 (BOSCH GMBH ROBERT [DE]) 7. März 2002 (2002-03-07) * Satz 3, Absatz 8 - Absatz 10; Ansprüche 1,2; Abbildungen 2,3 * ----- | 1-10 | INV. G01D5/14 |
| X | US 6 265 867 B1 (FOWLER J THOMAS [US]) 24. Juli 2001 (2001-07-24) * Zusammenfassung; Abbildungen 1-3 * ----- | 1,4,8,10 | |
| A | DE 197 41 579 A1 (BOSCH GMBH ROBERT [DE]) 25. März 1999 (1999-03-25) * Anspruch 1; Abbildung 7 * ----- | 4 | |
| A | US 2007/093980 A1 (STEK AALBERT [NL] ET AL) 26. April 2007 (2007-04-26) * Absatz [0009]; Anspruch 2; Abbildungen 1,2 * ----- | 7 | |

RECHERCHIERTE SACHGEBIETE (IPC)

G01D

Der vorliegende Recherchenbericht wurde für alle Patentansprüche erstellt

| Recherchenort | Abschlußdatum der Recherche | Prüfer |
|---|---|---|
| München | 19. April 2012 | Flierl, Patrik |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 11 00 9995

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-04-2012

| Im Recherchenbericht angeführtes Patentdokument | | Datum der Veröffentlichung | Mitglied(er) der Patentfamilie | | Datum der Veröffentlichung |
|---|---|---|---|---|---|
| DE 10042006 | A1 | 07-03-2002 | DE | 10042006 A1 | 07-03-2002 |
| | | | EP | 1204843 A1 | 15-05-2002 |
| | | | JP | 2004518110 A | 17-06-2004 |
| | | | WO | 0218868 A1 | 07-03-2002 |
| US 6265867 | B1 | 24-07-2001 | AT | 532028 T | 15-11-2011 |
| | | | CA | 2373381 A1 | 23-11-2000 |
| | | | EP | 1183498 A1 | 06-03-2002 |
| | | | JP | 2002544509 A | 24-12-2002 |
| | | | US | 6265867 B1 | 24-07-2001 |
| | | | WO | 0070300 A1 | 23-11-2000 |
| DE 19741579 | A1 | 25-03-1999 | KEINE | | |
| US 2007093980 | A1 | 26-04-2007 | AT | 413589 T | 15-11-2008 |
| | | | CN | 1882822 A | 20-12-2006 |
| | | | EP | 1697697 A1 | 06-09-2006 |
| | | | JP | 2007511778 A | 10-05-2007 |
| | | | KR | 20060117324 A | 16-11-2006 |
| | | | US | 2007093980 A1 | 26-04-2007 |
| | | | WO | 2005050140 A1 | 02-06-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3443176 C1